(19) Europäisches Patentamt
European Patent Office
Office européen des brevets

(11) Publication number: **0 090 406**
**A1**

(12) # EUROPEAN PATENT APPLICATION

(21) Application number: **83103086.1**

(51) Int. Cl.³: **A 23 L 1/30**

(22) Date of filing: **28.03.83**

(30) Priority: **30.03.82 JP 52639/82**

(43) Date of publication of application: **05.10.83**
**Bulletin 83/40**

(84) Designated Contracting States: **DE FR GB**

(71) Applicant: **MEIJI SEIKA KAISHA LTD.,**
**2-4-16 Kyobashi 2-chome, Chuo-ku, Tokyo 104 (JP)**

(72) Inventor: **Naito, Hiroshi, 29-17, Higashinaka-machi,**
**Urawa-shi Saitama-ken (JP)**
Inventor: **Noguchi, Tadashi, 1-27-3-207, Nishigahara,**
**Kita-ku Tokyo (JP)**
Inventor: **Sato, Ryuichiro, 3-7-9-303, Ogikubo,**
**Suginami-ku Tokyo (JP)**
Inventor: **Tsuji, Keiko, 9-23 Shimoochiai 2-chome,**
**Shinjuku-ku Tokyo (JP)**
Inventor: **Hidaka, Hidemasa, 16-11 Kishimachi 6-chome,**
**Urawa-shi Saitama-ken (JP)**

(74) Representative: **Patentanwälte Müller-Boré, Deufel,**
**Schön, Hertel, Lewald, Otto,**
**Postfach 26 02 47 Isartorplatz 6, D-8000 München 26 (DE)**

(54) **Health food and drink.**

(57) Casein phosphopeptide is obtained by reacting casein with trypsin, then adding calcium or ferric ions to the reaction medium, and finally recovering the reaction product. The casein phosphopeptide is added to food or drink, whereby calcium and/or iron may be efficiently absorbed by the human body, thus providing food and drink that are good for health.

EP 0 090 406 A1

ACTORUM AG

0090406

FIELD OF THE INVENTION:

This invention relates to food and drink that are good for health and increase absorption of calcium or iron.

More particularly, it relates to food and drink that are good for health and increase absorption of calcium or iron which is characterized in that there is added to the food or drink a casein phosphopeptide that is produced by enzymatic degradation with trypsin of casein.

3. BACKGROUND OF THE INVENTION:

For many years, milk has been known for its ability to provide complete nutrition. It is regarded as the best food in terms of calcium supply.

Calcium, in turn, is the most abundant metal in the human body and is absorbed by humans in formation of bones and teeth, as well as in metabolism and various reactions and mechanisms of the living body.

The effect of milk is attributable not only to the

calcium content but also to the property of digestion and absorption or, otherwise stated, the high efficacy of utilization. Various studies have pointed out the contributions of lactose in milk, calcium-binding protein present in small quantities, or casein itself.

In addition to the active transport at the upper part of small intestine controlled by the regulation of vitamine D and various hormones [Hiroshi Naito, Chemistry and Biology, 18, 554-558 (1980)], the importance of passive transport at the lower part of the small intestine has again been recognized in the absorption of calcium by the body.

To explain how calcium in milk is efficiently absorbed by the body, it is suggested that a phosphopeptide present in material produced when casein has been decomposed by pancreatic enzymes, particularly trypsin, solubilizes calcium in the small intestine, thus increasing the amount of soluble calcium and working as the enhancer of calcium absorption [H. Naito, A. Kawakami, T. Imamura, Agricultural and Biological chemistry, 36, 409-415 (1972); Y. S. Lee, T. Noguchi, H. Naito, British Journal of Nutrition, 43, 457-467 (1980)].

It is widely accepted that calcium should be solubilized in order to be absorbed through the small

intestine.

The peptide is called "casein phosphopeptide (hereinafter referred to as "cpp")". It is known that there are two representative types of cpp, namely, one derived from β-casein (β-cpp) and another derived from α-casein (α-cpp).

Their structures and various constants are as shown in Table 1.

β-cpp has been extensively studied and its structure has been determined [W. Manson, W. D. Annan, Archives of Biochemistry and Biophysics, 145, 16-26 (1971)].

The structure in Table 1 for α-cpp is estimated, hence it may be further degraded.

Table 1

| | α-cpp | β-cpp |
|---|---|---|
| Molecular Weight | about 4,400 | about 2,500 |
| Structure | $H_2N$·AsP-Ile-<br>Gly-SerⓅ-Glu<br>-SerⓅ-Thr-<br>Glu-Asp-Gln-<br>Ala-Met-Glu-<br>Asp-Ile-Lys-<br>Gln-Met-Glu-<br>Ala-Glu-SerⓅ<br>-Ile-Ser-<br>SerⓅ-SerⓅ-<br>Glu-Glu-Ile-<br>Val-Pro-Asn-<br>SerⓅ-Val-Glu<br>-Gln-Lys·<br>COOH | $H_2N$·Arg-Glu-<br>Leu-Glu-Glu-<br>Leu-Asn-Val-<br>Pro-Gly-Glu-<br>Ile-Val-Glu-<br>SerⓅ-Leu-SerⓅ<br>-SerⓅ-SerⓅ-Glu<br>-Glu-Ser-Ile<br>-Thr-<br>Arg·COOH |
| Number of phosphoric acid residue | 6 | 4 |
| N/P atomic ratio | 7.2 | 8 |
| Number of Carboxyl residue | 12 | 7 |
| Isoelectric point | pH 1 - 2 | pH 1 - 2 |

In the above Table 1, abbreviations for the amino acid residue are as follows:

Ala: L-alanine, Arg: L-arginine,

Asp: L-aspartic acid, Asn: L-asparagine,

Glu: L-glutamic acid, Gln: L-glutamine,

Gly: glycine, Ile: L-isoleucine,

Leu: L-leucine, Lys: L-lysine,

Met: L-methionine, Pro: L-proline,

Ser: L-serine

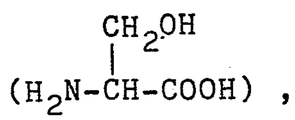

Ser℗: L-phosphoserine

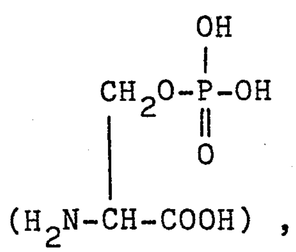

Thr: L-threonine, Val: L-valine,

$H_2N$·AsP: N-terminal L-aspartic acid,

$H_2N$·Arg: N-terminal L-arginine,

Lys·COOH: C-terminal L-lysine,

Arg·COOH: C-terminal L-arginine.

The present inventors have studied whether calcium-solubilizing activity by cpp produced _in vivo_, as noted above, is shared also by cpp produced _in vitro_, and found that the latter cpp also has a

significant solubilizing activity of calcium.

Based on this new finding, the inventors have invented health food and drink that have a superior enhancing effect on calcium absorption by adding cpp produced *in vitro* to food, whereby calcium may be absorbed by the body in the form of a solubilized calcium. This is considered a significant improvement in digestion and absorption of calcium which has heretofore been efficiently done a very limited number of food and drink such as milk.

The present inventors have also studied absorption of iron and found that cpp produced *in vitro* has a solubilizing capability on iron and increase iron absorption. It is widely believed that iron must be solubilized in order for it to be absorbed through the small intestine.

Based on the new finding, the inventors have invented health food and drink that have a superior enhancing effect on iron absorption by adding cpp produced *in vitro* to food, whereby iron may be absorbed by the body in the form of a solubilized iron. This is also considered a significant improvement in digestion and absorption of iron which has heretofore been efficiently absorbed through a limited number of food and drink, such as heme or meat products.

The present invention is to provide food and drink containing cpp that are good for health.

## 4. DETAILED DESCRIPTION OF THE INVENTION:

cpp employed in the present invention has the above-described properties and may be produced by any of the following methods.

In one method, casein is hydrolized with a crystalline trypsin to produce cpp, after which the reaction mixture is adjusted to a pH value of 4.5 - 5.0 to eliminate the unreacted casein and part of the impurities by precipitation, followed by addition to the supernatant of barium chloride and ethanol (to the final concentration of 50 v/v %) to precipitate and recover cpp [R. F. Peterson, L. W. Nouman and T. L. McMeekin, Journal of the American Chemical Society, 80, 95-99 (1958)].

Alternatively, cpp, produced by hydrolysis of casein with a crystalline trypsin, may be fractionated and separated by chromatographic techniques such as gel permeation chromatography or ion-exchange chromatography.

The present inventors have studied new methods of recovering cpp. As a result, it was found that cpp may be recovered at a high purity by using a metal ion

other than barium chloride, such as calcium, iron or magnesium and, where necessary, by using a hydrophilic solvent. Use of calcium or iron ion is industrially advantageous because the produced cpp may be added to food or drink without removing the calcium or iron.

The inventors have also studied methods of eliminating the bitter taste of casein hydrolysate. It was found that the bitter taste may be effectively eliminated by passing the hydrolysate through a column containing activated carbon or ion-exchange resin, without substantial impairment of cpp.

cpp employed in the invention inhibits precipitation of calcium and keeps the calcium in a solubilized state, almost 100 % at a pH value of 7 or 8.

Although cpp is decomposed to a certain extent by digestive enzymes when taken in orally, a considerable amount of it is maintained intact and, as a result, calcium is kept almost completely solubilized.

Solubilization of calcium by cpp will be shown by the following Experiments.

Experiment 1

Calcium-solubilizing activity was determined by using cpp obtained by the hereafter-described Preparation 2.

0.5 ml of a 5 mg/ml cpp solution and 0.5 ml of a 10 mM aqueous calcium chloride solution were mixed, and 1.0 ml of a 20 mM phosphate buffer solution, adjusted to a pH value of 7 or 8, was added, then the whole mixture was maintained at 25°C for 6 hours. At the end of the period, calcium phosphate precipitate was eliminated by centrifugation, then 0.1 N hydrochloric acid was added to the supernatant to prevent further formation of precipitate. The calcium concentration in the supernatant was measured by atomic absorption analysis to determine the remaining solubilized calcium. A similar test was conducted as a control, but using distilled water in place of cpp solution. The results are shown in Table 2.

Table 2

| Sample | pH 7.0 | pH 8.0 |
|---|---|---|
| cpp solution | 105 % | 96 % |
| Control | ≤10 % | ≤10 % |

It is evident from the above results that cpp produced <u>in vitro</u> exhibits a good calcium-solubilizing activity.

Experiment 2

1 ml of a 50 mg/ml cpp solution obtained by Preparation 2 was mixed with 9 ml of an artificial gastric or enteric juice (according to Japanese Pharmacopoeia, 7th revised edition), then the mixture was maintained at 40°C for 2 hours or 6 hours, respectively. After the treatment, pepsin and pancreatin in the juices were deactivated with boiling water. After centrifugation of the mixture, cpp remaining in the supernatant was measured by high pressure liquid chromatography to determine the remaining rate. The calcium-solubilizing activity was also measured by using 0.5 ml of cpp remaining in the supernatant in a procedure similar to that in Experiment 1 at a pH value of 8. The results are shown in Table 3.

0090406

Table 3

| Sample | Remaining rate of cpp | Remaining rate of solubilized calcium |
| --- | --- | --- |
| non-treated cpp | 100 % | 101 % |
| cpp treated with artificial gastric juice | 65 % | 99 % |
| cpp treated with artificial enteric juice | 60 % | 98 % |
| artificial gastric juice | - | ≤10 % |
| artificial enteric juice | - | ≤10 % |
| control (distilled water) | - | ≤10 % |

It is evident from the above results that cpp produced in vitro will not lose calcium-solubilizing activity due to the action of gastric and enteric juice in the body.

Experiment 3

A barium salt of cpp was obtained from β-casein

by the method of Manson et al (Archives of Biochemistry and Biophysics, 145, 16-26).

This was purified by chromatography through Sephadex G-25, DEAE Sephadex A-25 and Biogel P-6. The calcium-solubilizing activity was measured by using the thus obtained cpp in a procedure similar to that in Experiment 1. The results are shown in Table 4.

Table 4

| Sample | pH 7.0 | pH 8.0 |
|---|---|---|
| cpp | 103 % | 101 % |
| Control | ≤10 % | ≤10 % |

Solubilization of iron with cpp is shown by the following Experiments.

Experiment 4

Rats (Wister strain, male, 5-week-old, n=4) that had been trained to be fed within a prescribed period of 1.5 hours were fed and, 1 hour after the feeding, sacrificed. The contents in the small intestine were washed and collected by a physiological saline solution then fractionated to soluble and insoluble fractions by centrifugation. The content of iron in respective

fractions were measured by atomic absorption analysis. The results are shown in Table 5.

Table 5

| Sample | 20 % casein feed | 20 % Egg yolk feed | 20 % Egg white feed | 20 % Soy protein feed |
|---|---|---|---|---|
| cpp Formation | + | - | - | - |
| Soluble Iron | 75.9 % | 21.2 % | 16.0 % | 36.1 % |
| Insoluble Iron | 24.1 % | 78.8 % | 84.0 % | 63.9 % |

It is evident from the above results that cpp produced *in vivo* increases the amount of soluble iron in the small intestine.

Experiment 5

Iron-solubilizing activity was determined by using cpp obtained by Preparation 2.

0.5 ml of a 0.6 mg/ml cpp solution and 0.5 ml of a 10 mM aqueous ferric chloride solution were mixed, and 1.0 ml of a 20 mM phosphate buffer solution, adjusted

to a pH value of 7 or 8, was added, then the whole mixture was maintained at 25°C for 30 minutes. At the end of the period, ferric phosphate precipitate was eliminated by centrifugation, then 0.1 N hydrochloric acid was added to prevent further formation of precipitate. The iron concentration in the supernatant was measured by atomic absorption analysis to determine the remaining solubilized iron.

Similar tests were conducted, as controls, by using distilled water or a soy protein hydrolysate with trypsin. The results are shown in Table 6.

Table 6

| Sample | pH 7.0 | pH 8.0 |
|---|---|---|
| cpp solution | 13.5 % | 34.0 % |
| Distilled water | 2.5 % | 6.5 % |
| Soy protein hydrolysate solution | 3.0 % | 5.0 % |

It is evident from the above results that cpp produced <u>in vitro</u> exhibits a good iron-solubilizing activity.

As seen in the above Experiments, cpp produced <u>in</u>

*vitro* solubilizes both calcium and iron to a high degree.

Use of cpp is quite advantageous as compared with oral intake of casein, which undergoes a further enzymatic degradation in the body and tends to lose the calcium-solubilizing activity (Y. S. Lee et al., Ibid.).

Further, for *in vivo* formation of cpp with milk casein, a large intake of milk is necessary, whereas cpp according to the present invention may be used in a smaller amount to obtain satisfactory results and therefore, may be added to diverse kinds of food and drink.

The food and drink according to the invention may include, for example, confectionary (such as tablet sweets and biscuits) and drink (such as lactic acid-containing beverages).

cpp may be added either to raw materials or to final products directly.

There is no limit to the amount of cpp to be added to the foodstuff, as it has no bitter taste or odor peculiar to casein and has no toxicity to humans. However, in view of various factors such as cost, it is preferably added, in the case of confectionaries such as tablet sweets and biscuits, in an amount of 1 - 30 %

to the raw materials and, in the case of beverages, in an amount of 0.5 - 6 % to the final product.

The present invention relating to food and drink, to which cpp is added, is explained in the following Examples.

Example 1

A mixture of 910 g of powdered sugar, 40 g of calcium carbonate, 30 g of cpp produced by Preparation 1, 10 g of a sugar ester and 5 g of hardened soybean oil was mixed in a two-shaft mixer, to which 5 g of an aqueous solution of gelatin was gradually added, then the whole mixture was thoroughly blended at 50 - 70°C. After completion of blending, the mixture was passed through a sieve, dried, and then a perfume was added. The mixture was blended again, then punched to give a tablet sweet.

Example 2

A dough was prepared from 1,200 g of flour, 340 g of sugar, 150 g of margarine, 20 g of whole egg powder, 9 g of salt, 30 g of calcium carbonate, 20 g of cpp produced by Preparation 2, 6 g of sodium bicarbonate, 5 g of ammonium carbonate, 6.3 g of soybean lecithin, 5 g of vanilla oil and 250 g of water. This was extended,

shaped and baked to produce a biscuit.

Example 3

600 g of sugar and 200 g of prune extract were dissolved in water, and the mixture was boiled down. 16 g of pectin that had been previously dissolved were added, and the mixture was thoroughly blended and further boiled down. A solution of 5 g of citric acid, 2 g of sodium citrate and 10 g of cpp produced by Preparation 3 was added to the mixture, and then the whole mixture was placed in a vessel and allowed to cool. The solidified mixture was cut into pieces, 10 g each, to give a prune jelly.

Calcium and iron, contained in the food and drink obtained above, are maintained in a solubilized state by the chelating action of phosphoric group of phosphoserine and carboxy groups of acidic amino acids in the cpp. Thus, the calcium and iron are present in the small intestine in a high concentration and are able to be absorbed.

The food and drink according to the present invention, therefore, increase absorption of calcium and iron in growing infants and children, and are good for the treatment of anemia in women, and bone diseases such as osteoporosis in aged people. They also have a

healthy influence upon the metabolism of calcium and iron in the healthy humans.

The best method to produce cpp, which is employed in the present invention as the calcium and iron absorption-enhancing substance, is explained below.

The method comprises contacting casein with trypsin or an enzyme preparation containing trypsin to give a hydrolysate solution containing cpp, adding to the solution calcium ions and a hydrophilic solvent, and recovering the thus prepared cpp.

Alternatively, ferric ions may be added to the hydrolysate solution containing cpp to recover cpp.

Still alternatively, the hydrolysate solution may be chromatographed through active carbon or an cation exchange-resin to eliminate the bitter taste and recover cpp.

The starting material or casein employed in the method is preferably in the form of acidic casein, sodium caseinate or calcium caseinate. However, milk or skimmed milk which are still impure, may also be used as the starting material. According to the method, casein, the starting material, is dissolved in water and then contacted with trypsin or an enzyme preparation containing trypsin. Trypsin or an enzyme preparation containing trypsin may be commercially

available pancreatin, although a crystalline grade is more preferable in view of considerations such as yield.

cpp may be produced by reacting the starting material, or casein, with an enzyme as mentioned above. From a practical point of view, concentration of casein should be between 2 - 30 %. The pH value should be from 6.0 to 9.0. The temperature at which the reaction is performed should be kept between 15 - 60°C, preferably 20 - 50°C.

The weight ratio of enzyme to casein substrate should normally be 0.001 - 2 %, when calculated as crystalline trypsin. They are contacted for from 5 minutes to 100 hours, during which the reaction will produce cpp.

Recovery of cpp thus produced may be performed by the addition of a calcium salt (such as calcium chloride or calcium acetate) and a hydrophilic solvent to the reaction mixture. In the recovery step, the pH value should be maintained at or below 10, since elimination of phosphoric acid from cpp will occur at a higher pH value. Conversely, the reaction at a pH value of below 5.5 will give rise to formation of a precipitate, which must be removed before precipitation of cpp. The reaction at a pH value of below 3

will cause a simultaneous precipitation of cpp, hence it should be avoided. In summary, the reaction should preferably be performed at a pH value range of 3 - 10.

Calcium is normally added in the range of 0.01 - 10 %, within which no significant difference is observed.

The hydrophilic solvent to be used for precipitation includes, for example, methanol, ethanol, propanol, isopropanol, butanol and acetone. It should be added to attain a final concentration of 30 - 80 v/v %.

Where cpp is recovered by using iron, the iron should be in the form of ferric ion such as ferric chloride or ferric citrate. In this case, cpp can be recovered without using any organic solvent.

Iron should be preferably added in the range of 0.01 - 1 %, based on the reaction mixture. The temperature at which recovery of cpp is performed is not critical. Therefore, recovery may be performed at any temperature at which no boiling of the solvent takes place, although slightly higher yield can be obtained by keeping the temperature relatively low.

Isolation of cpp precipitate thus obtained may be performed by conventional means, such as decantation, filtration or centrifugation. It may be further purified by washing it with a solvent employed for the

recovery.

The thus isolated cpp precipitate can be dried by conventional means (such as by hot air, fluidized bed drying or vacuum drying) to give a white to pale yellow powder having no odor and almost no taste.

Where cpp is purified by column chromatography to remove its bitter taste, a hydrolysate solution of casein with trypsin is passed through a column containing activated carbon or a cation-exchange resin. It is preferable to remove part of the impurities by isoelectric point sedimentation at pH 3 - 5.5, in advance of subjecting the hydrolysate to column chromatography. Upon chromatography, the hydrolysate is preferably passed through a column at a rate of 0.2 - 2.0 SV and at a concentration of 2 - 15 %. By this method, 1.0 - 2.0 kg of the product (calculated as the starting casein) may be treated with about a 1 l column.

The purity of cpp thus obtained may be assayed through the determination of nitrogen content by Kjeldahl method and of phosphorus content by Allen's method and modified Nakamura's method, then calculation of N/P atomic ratio.

The cpp obtained by the method of the invention has an N/P atomic ratio of 7 - 20. It is almost free

from the bitter taste which is peculiar to decomposition products of casein, hence may be used for food and drink as is.

The cpp contains almost no aromatic amino acids, hence it shows almost no ultraviolet absorption assigned thereto (e.g. 280 nm, 254 nm) but only shows absorption assigned to peptide bonds (205 - 220 nm).

The cpp may be alternatively assayed by high pressure liquid chromatography, using, for example, TSK-GEL, G-2000 SW (Tradename, Toyo Soda Manufacturing Co., Ltd.), eluted with a 0.1 M phosphate buffer solution (pH 6.5, containing 0.1 M sodium chloride).

Detection of cpp may be performed by the measurement of ultraviolet absorption at 215 nm. According to assay by this method, it was confirmed that the cpp obtained by the process of the invention contains two types of cpp which are presumably originated from α-cpp and β-cpp and that the content of cpp is higher than 50 %.

Production of cpp according to the present invention will be explained by the following Preparations.

Preparation 1

20 kg of sodium caseinate, produced in New Zealand, were dissolved in water to give a 20 % aqueous

solution having a pH value of 8.0. A crystalline porcine trypsin (Novo, Denmark) was added to the solution in an amount of 0.5 %, based on the substrate, then the mixture was allowed to react at 50°C at a pH value of 7.0 - 8.5 for 30 minutes. At the end of the period, the reaction mixture was immediately adjusted to a pH value of 4.5 to produce a white precipitate, which was removed by centrifugation.

Calcium chloride and ethanol were added to the supernatant to final concentrations of 2.0 % and 50 v/v %, respectively, then the mixture was stirred and allowed to stand overnight at ambient temperature. The supernatant was discarded by decantation and the cpp fraction was recovered with a basket type centrifugal machine. The precipitate was washed, in turn, with a 50 % ethanol and then ethanol and dried by hot air, to give 3.4 kg of the cpp fraction. This contained 4.5 % of water and the N/P atomic ratio was 15.5. The purity, as determined by high pressure liquid chromatography, was 80 %.

Preparation 2

0.5 % of crystalline trypsin, based on the substrate, was added to a 2 % solution of lactic casein (pH 8.0), and the mixture was allowed to react at 50°C

at a pH value of 7.0 - 8.5 for 30 minutes. At the end of the period, the reaction mixture was immediately adjusted to a pH value of 5 and the precipitate produced was removed. 0.1 % of calcium acetate and 50 % of ethanol were added to the supernatant to precipitate cpp, which was recovered by centrifugation and washed with ethanol to give the desired product. The N/P atomic ratio of the cpp was 9.0 and it contained 3.5 % of calcium. The purity, as determined by high pressure liquid chromatography, was 90 % or higher.

Preparation 3

Crystalline trypsin was added to a 10 % aqueous solution of lactic casein (pH 8.0) in an amount of 0.01 %, based on the substrate, then the mixture was allowed to react at 50°C at a pH value of 7.8 - 8.2 for 6 hours. At the end of the period, the reaction mixture was adjusted to a pH value of 4.5, then the resulting precipitate was removed immediately.

Ferric chloride was added to the supernatant to a concentration of 20 mM to precipitate cpp, which was recovered by centrifugation in a yield of 17.1 %.

The cpp had the N/P atomic ratio of 13.0 and contained 3.5 % of iron. The purity of cpp, as determined

by high pressure liquid chromatography, was 85 %.

Preparation 4

The supernatant containing 7.5 % of the solid, obtained by isoelectric point sedimentation in Preparation 3, was passed through a column (3 cm ο x 30 cm) containing Dowex HCR-W2 (Tradename, 20 - 50 mesh, acid form) at a rate of 0.5 SV. The eluate was fractionated every 200 ml. A bitter taste was detected after elution of 2.4 l, at which the elution was stopped and the whole eluate was recovered and lyophilized. The cpp, which was almost free from bitter taste and had a N/P atomic ratio of 19.5, was recovered in a yield of nearly 100 %.

The purity of cpp, as determined by high pressure liquid chromatography, was 50.3 %.

What is claimed is:

1. Food and drink, that are good for health, which comprises casein phosphopeptide.

2. Food and drink as claimed in claim 1, wherein said casein phosphopeptide is produced by contacting casein with trypsin, then adding calcium ions and a hydrophilic organic solvent to the reaction medium, and finally recovering the reaction product.

3. Food and drink as claimed in claim 1, wherein said casein phosphopeptide is produced by contacting casein with trypsin, then passing the reaction product through a column containing activated carbon or a cation-exchange resin to eliminate a bitter taste, and finally recovering the reaction product.

4. Food and drink as claimed in claim 1, wherein said casein phosphopeptide is produced by contacting casein with trypsin, then adding ferric ions to the reaction medium, and finally recovering the reaction product.

European Patent Office

# EUROPEAN SEARCH REPORT

0090406
Application number

EP 83 10 3086

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 922 050 (UNILEVER N.V.)<br>* Claims 1-5 *<br>--- | | A 23 L 1/30 |
| A | GB-A-1 338 936 (UNIVERSITY OF STRATHCLYDE)<br>* Page 1, lines 74, 75; claims 1, 3, 6 *<br>--- | | |
| A | DE-A-2 844 992 (ROUSSEL-UCLAF S.A.)<br>* Claim 1 *<br>----- | | |
| | | | **TECHNICAL FIELDS SEARCHED (Int. Cl. 3)** |
| | | | A 23 L 1/00<br>A 23 J 1/00 |

The present search report has been drawn up for all claims

| Place of search | Date of completion of the search | Examiner |
|---|---|---|
| BERLIN | 08-06-1983 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82